# EUROPEAN PATENT SPECIFICATION

(11) **EP 2 218 945 B1**
(45) Date of publication and mention of the grant of the patent: **22.07.2015**
(21) Application number: 10153519.3
(22) Date of filing: 12.02.2010
(51) Int. Cl.: F16H 61/02

(54) **Identification method of the optimal gear for a transmission of a vehicle**
Verfahren zur Erkennung des optimalen Gangs für ein Getriebe eines Fahrzeugs
Procédé d'identification de l'engrenage optimal pour la transmission d'un véhicule

(30) Priority: 13.02.2009 IT BO20090076
(43) Date of publication of application: 18.08.2010
(73) Proprietor: Magneti Marelli S.p.A., Corbetta (MI) (IT)
(72) Inventor: Prodi, Giovanni, 40137 Bologna (IT); Rocca, Giuseppe, 40133 Bologna (IT); Angellotti, Serino, 40134 Bologna (IT); Nesci, Walter, 40037 Sasso Marconi (IT)
(74) Representative: Bergadano, Mirko

(56) References cited:
- EP-A- 0 474 401
- EP-A- 0 600 400
- WO-A-98/33673
- US-A- 4 492 112
- US-A- 4 559 599

## Description

### TECHNICAL FIELD

The present invention relates to an identification method of the optimal gear for a transmission of a vehicle.

The present invention is advantageously applied to an automatic transmission of both traditional and AMT (Automatic Manual Transmission) type, to which explicit reference will be made without therefore loosing in generality.

### PRIOR ART

The currently marketed automatic transmissions (of both traditional and AMT type) comprise a control unit which determines the gear to be engaged at every instant during automatic operation. At present, the gear to be engaged is determined (obviously, in addition to according to the mechanical limits of the transmission and engine) to offer the ideal accommodation between drivability and comfort by means of specific selection logics implemented in the control unit; however, these selection logics do not take into adequate consideration the need to reduce fuel consumption and thus they do not allow to minimize fuel consumption.

EP0474401 describes an identification method of the optimal gear for a transmission of a vehicle provided with an internal combustion engine.

### DESCRIPTION OF THE INVENTION

It is the object of the present invention to provide an identification method of the optimal gear for a transmission of a vehicle, which identification method allows to minimize the consumption and, in particular, is easy and cost-effective to be implemented in an existing transmission.

According to the present invention, an identification method of the optimal gear of a transmission of a vehicle is provided as claimed in the appended claims.

### BRIEF DESCRIPTION OF THE DRAWINGS

The present invention will now be described with reference to the accompanying drawings, which illustrate a non-limitative embodiment thereof, in which:
- figure 1 is a diagrammatic view of a vehicle implementing the identification method of the optimal gear object of the present invention;
- figure 2 is a block chart illustrating a selection logic implemented in a control unit of the transmission of the vehicle in figure 1; and
- figure 3 is a graph illustrating an efficiency map of an engine of the vehicle in figure 1, stored in a memory of the control unit of the transmission.

### PREFERRED EMBODIMENTS OF THE INVENTION

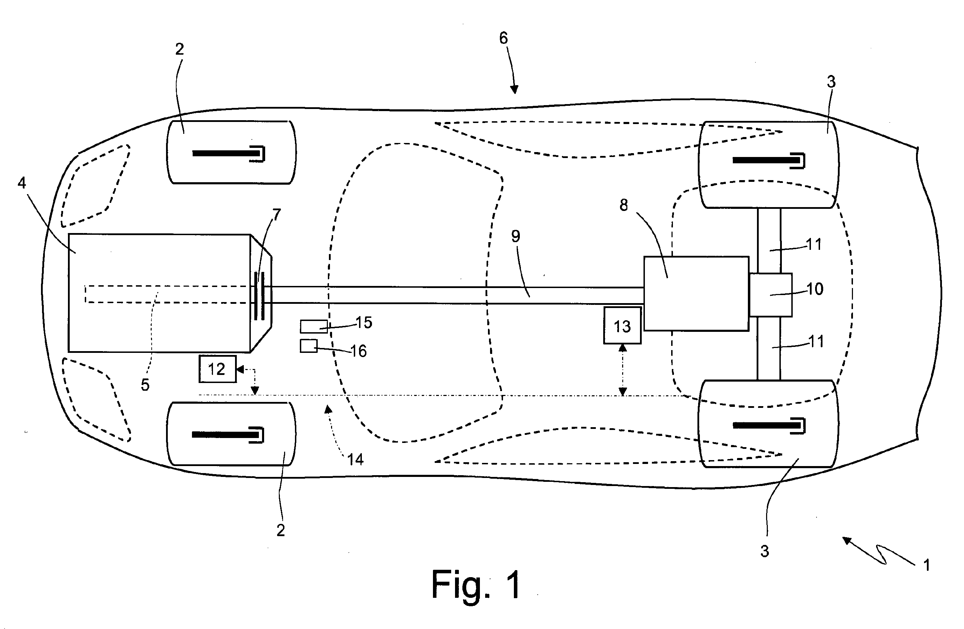

In figure 1, numeral 1 indicates as a whole a vehicle (in particular, a car) provided with two front wheels 2 and two rear drive wheels 3; an internal combustion engine 4 is arranged at the front, which is provided with a drive shaft 5 and produces a torque, which is transmitted to the rear drive wheels 3 by means of an automatic manual (AMT) transmission 6. Transmission 6 comprises a servo-assisted clutch 7 which is arranged at the carriage front and accommodated in a bell integral with the engine 4, a servo-assisted gearbox 8 arranged at the rear axle and having a plurality of gears, and a propeller shaft 9 which connects the output of clutch 6 to an input of gearbox 8. A self-locking differential 10 is arranged in cascade to gearbox 8, from which differential a pair of axle shafts 11 depart, each of which is integral with a rear drive wheel 3.

Vehicle 1 comprises a control unit 12 of the engine 4, which governs the engine 4, a control unit 13 of the transmission 6, which governs the transmission 6, and a bus line 14, which is made according to the CAN (Car Area Network) protocol, extends throughout the vehicle 1 and allows the control units 12 and 13 to dialog with each other. In other words, the control unit 12 of the engine 4 and the control unit 13 of the transmission 6 are connected to the bus line 14, and may thus communicate with each other by means of messages sent on the bus line 14 itself.

The control unit 12 of the engine 4 controls the engine 4 according to the wishes expressed by the driver by pressing an accelerator pedal 15 and by pressing a brake pedal 16; in particular, the position of the accelerator pedal 15 is read by a specific position sensor, which is able to accurately determine the actual position of the accelerator pedal 15, the position of the brake pedal 16 is determined instead by the oil pressure in the braking system in a binary manner (i.e. brake pedal 16 released or brake pedal 16 pressed).

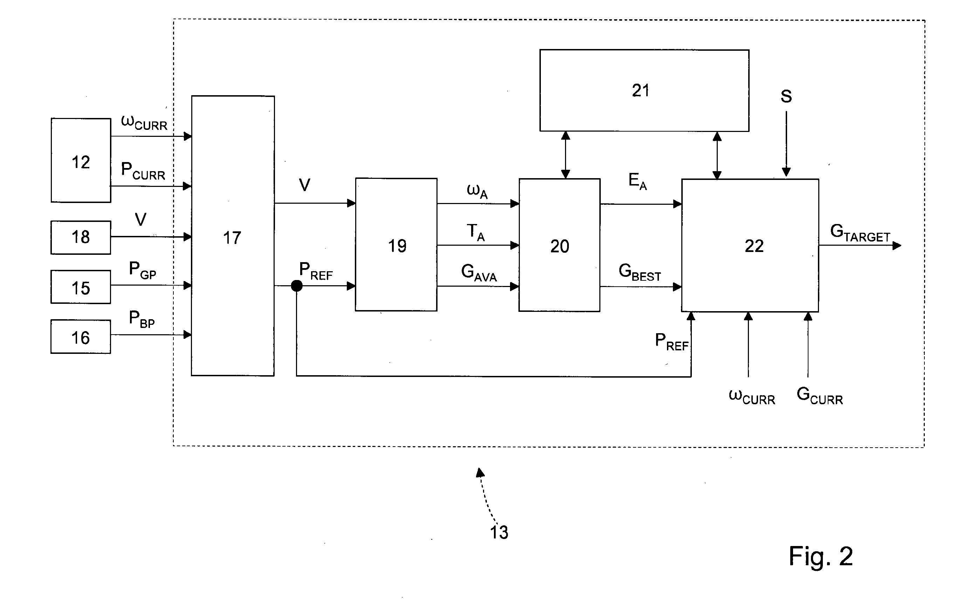

A selection logic implemented in the control unit 13 of transmission 6 for identifying the optimal gear G_{TARGET} for the gearbox 8 (which may be equal to or different from the current gear G_{CURR} engaged in the gearbox 8) is described below with reference to the block chart in figure 2.

The control unit 13 comprises a calculation block 17, which receives at the input a plurality of pieces of information, and in particular it receives a current rotation speed ω_{CURR} of the engine 4 and a current driving power P_{CURR} generated by the engine 4 (which could be replaced by the equivalent current torque T_{CURR} because the current driving power P_{CURR} is equal to the current torque T_{CURR} multiplied by the current rotation speed ω_{CURR} from the control unit 12 of engine 4, it receives a proceeding speed V of vehicle 1 from a tachometer sensor 18, receives the current position of the accelerator pedal 15, and receives the current position of the brake pedal 16.

By using the input information (which may be filtered in advance to attenuate possible interferences or in all cases to suppress pulsing phenomena which are not compatible with the reaction ability of transmission 6), the calculation block 17 determines a reference driving power P_{REF} which is the power that will be reasonably required by engine 4 in the immediate future; the time horizon for determining the reference driving power P_{REF} is of the order of seconds. In other words, the reference driving power P_{REF} is an estimate of the power which will be delivered by engine 4 in the immediate future, and is used as described below for determining the optimal gear G_{TARGET} which should precisely be used to transmit the reference driving power P_{REF} to the drive wheels 3.

Under static conditions, i.e. when the proceeding speed V of vehicle 1 is approximately constant, the reference driving power P_{REF} is substantially equal to the current driving power P_{CURR}; instead, under transient dynamic conditions, i.e. when the proceeding speed V of vehicle 1 is variable, the reference driving power P_{REF} may even considerably differ from the current driving power P_{CURR}.

According to a preferred embodiment, in order to determine the reference driving power P_{REF}, the calculation block 17 uses the current driving power P_{CURR} corrected according to the position of the accelerator pedal 15, according to the travel speed (i.e. to the prime derivative of the position in time) of the accelerator pedal 15, according to the position of the brake pedal 16, and according to the proceeding speed V of vehicle 1. In brief, the reference driving power P_{REF} is estimated by interpreting the position of the accelerator pedal 15 in conjunction with the proceeding speed V of vehicle 1, also using the estimate of the current driving power P_{CURR}.

According to a different embodiment, for calculating the reference driving power P_{REF}, the current driving power P_{CURR} could be replaced by the driving power required by a driver of vehicle 1 (required driving power P_{REQ}), which is determined by the control unit 12 of engine 4 in a known manner according to the current driving power P_{CURR}, according to the position of the accelerator pedal 15, and according to the proceeding speed V of vehicle 1. The required driving power P_{REQ} is the desired value that the control unit 12 of engine 4 attempts to actuate by appropriately piloting the engine 4, and may thus differ from the current driving power P_{CURR} (or from the equivalent current torque P_{CURR}) by an error that the control unit 12 attempts to cancel.

Taking the position of the accelerator pedal 15 into account prevents oscillations from one gear to another because in a traditional "Torque Based" control system, the control unit 12 of engine 4 interprets the accelerator pedal 15 according to the rotation speed of the engine 4 in order to calculate the torque T_{REQ} required by the driver; the accelerator pedal 15 positions being equal, the rotation speed of engine 4 changes once the optimal gear G_{TARGET} has been identified and the optimal gear G_{TARGET} has been engaged instead of the current gear G_{CURR}, and thus the torque T_{REQ} required by the driver determined by the control unit 12 of engine 4 by interpreting the position of the accelerator pedal 15 could change, and therefore the required power P_{REQ} could change. Thereby, the change of the required driving power P_{REQ} induced by the gear change may induce a further gear change back to the previously engaged gear, thus triggering a continuous oscillation between two gears.

Calculation block 17 communicates the reference driving power P_{REF} determined as described above and the proceeding speed V of vehicle 1 to a subsequent calculation block 19. The calculation block 19 identifies the available gears G_{AVA} which are able to make the engine 4 provide the reference driving power P_{REF} at the proceeding speed V of vehicle 1, compatibly with the physical limits of the engine 4 itself. In other words, the calculation block 19 identifies all the only available gears G_{AVA} among the gears of gearbox 8, which gears are able to make the engine 4 provide the reference driving power P_{REF} at the proceeding speed V of vehicle 1 compatibly with the physical limits of the engine 4 itself.

During a design phase, an acceptability interval of the rotation speed of engine 4 is determined, comprising a minimum rotation speed and a maximum rotation speed, and an acceptability interval of the torque of engine 4 is determined, comprising a minimum torque and a maximum torque according to the rotation speed of engine 4. These acceptability intervals are related to the physical limits of engine 4 and indicate the zone within which the engine 4 may work. The acceptability interval of the rotation speed and/or the acceptability interval of the torque are preferably narrower than the actual physical limits of engine 4 to ensure a certain change margin; in other words, there is a margin ensuring a certain flexibility between the minimum or the maximum of an acceptability interval and a corresponding minimum or maximum of the physical limit.

With reference to the torque acceptability interval, for each rotation speed of engine 4, the maximum and minimum torque constraints which may be delivered by the engine 4 itself are to be respected. Two other contributions are provided for calculating the maximum torque in addition to the characteristic data of the engine 4: a torque reserve (such a reserve, expressed as a percentage of the maximum torque, allows to select a gear while maintaining a certain margin in order to be able to satisfy a possible subsequent increase of the required torque without forcing the engine 4 to work under extreme conditions and without requiring excessively close gear changes) and an amount related to the average torque variation, such as to predict, over a calibratable time interval, future variations of the required torque (if the required torque decreases, the torque reserve may be decreased, and similarly if the required torque increases, the torque reserve may be increased).

According to a possible embodiment, the acceptability interval of the rotation speed and/or the acceptability interval of the torque are differentiated according to the various gears; by way of example, the minimum torque in fifth gear is generally lower than the minimum torque in first gear, or the minimum rotation speed in fifth gear is generally lower than the minimum rotation speed in first gear.

According to a further embodiment, a differential between the maximum torque of the torque acceptability interval and a maximum torque which may be physically delivered by engine 4 is increased when the reference driving power P_{REF} increases over time; furthermore, the differential between the maximum torque of the torque acceptability interval and the maximum torque which may be physically delivered by engine 4 is decreased when the reference driving power P_{REF} decreases over time.

For each gear of the gearbox 8, the calculation block 19 calculates the corresponding expected rotation speed ω_{A} which would be imposed on the engine 4 according to the proceeding speed V of vehicle 1 and to the transmission ratio of the gear; in other words, for each gear of the gearbox 8, the expected rotation speed ω_{A} is the speed that would be imposed on the engine 4 in the light of the proceeding speed V of vehicle 1 if the gear itself were engaged. The calculation of the expected rotation speed ω_{A} of each gear of the gearbox 8 is a simple multiplication of the rotation speed of a secondary shaft of gearbox 8 imposed by the proceeding speed V of vehicle 1 by a transmission ratio (known beforehand and constant) of the gear itself.

Furthermore, for each gear of the gearbox 8, the calculation block 19 calculates the corresponding expected torque T_{A} which would be required by the engine 4 according to the reference driving power P_{REF} and to the expected rotation speed ω_{A}; the calculation of the expected torque T_{A} for each gear of the gearbox 8 is a simple division of the reference driving power P_{REF} by the expected rotation speed ω_{A}.

Once the expected rotation speed ω_{A} and the expected torque T_{A} have been determined for each gear of the gearbox 8, the calculation block 19 identifies the available gears G_{AVA} by eliminating the gears having the expected rotation speed ω_{A} and/or the expected torque T_{A} outside the corresponding acceptability intervals of the engine 4, from all the gears of gearbox 8. In other words, the available gears G_{AVA} are all the only gears of the gearbox 8 having both the expected rotation speed ω_{A} and the expected torque T_{A} within the corresponding acceptability intervals of engine 4.

The calculation block 19 communicates all the available gears G_{AVA} along with the corresponding expected rotation speeds ω_{A} and expected torques T_{A} to a calculation block 20. For each available gear G_{AVA}, the calculation block 20 determines the corresponding expected efficiency E_{A} of the engine 4 according to the expected rotation speed ω_{A} and to the expected torque T_{A}; in other words, for each available gear G_{AVA}, the corresponding expected efficiency E_{A} is the efficiency at which the engine 4 would run if the gear itself were actually engaged and the required power P_{REQ} were delivered.

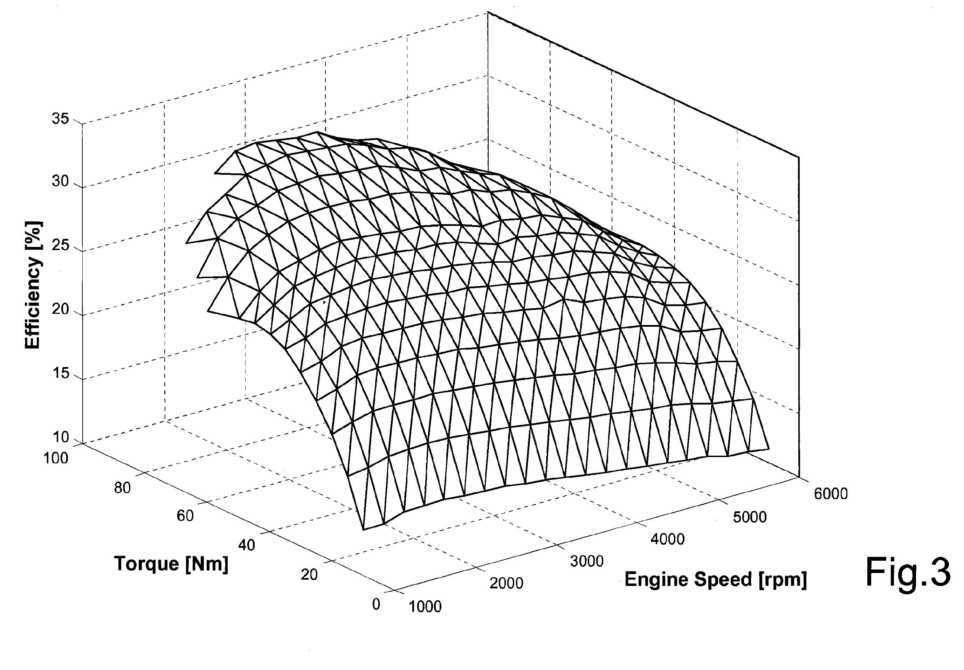

During a design phase, a three-dimensional efficiency map is determined, which is stored in a memory 21 of the control unit 13 of transmission 6 and provides the efficiency of the engine 4 according to the rotation speed of the engine 4 and to the torque delivered by the engine 4. An example of a three-dimensional efficiency map is shown in figure 3. By using the efficiency map stored in memory 21, determining the expected efficiency E_{A} is simple and fast according to the expected rotation speed ω_{A} and to the expected torque T_{A}.

Once the expected efficiencies E_{A} of the available gears G_{AVA} have been determined, the calculation block 20 determines a gear G_{BEST} with the maximum efficiency among the available gears G_{AVA}, thus identifying the gear which has the highest expected efficiency E_{A}.

The calculation block 20 communicates the gear G_{BEST} with the maximum efficiency and the corresponding expected efficiency E_{A} to a calculation block 22; the calculation block 22 further receives at the input the current gear G_{CURR} currently engaged by the gearbox 8 (data which are obviously known by the control unit 13 of transmission 6), the current rotation speed ω_{CURR} (data supplied by the control unit 13 of engine 4, as previously described), and the reference driving power P_{REF} supplied by the calculation block 17.

The calculation block 22 serves the function of identifying the optimal gear G_{TARGET} choosing between the gear G_{BEST} with the maximum efficiency and the current gear G_{CURR}; in other words, the calculation block 22 should decide if keeping the current gear G_{CURR} is more convenient or if engaging the gear G_{BEST} with the maximum efficiency is more convenient, taking not only fuel consumption optimization but also travelling comfort, travelling safety and mechanical wear of transmission 6 into account. Obviously, when the gear G_{BEST} with the maximum efficiency coincides with the current gear G_{CURR}, the calculation block 22 needs to make no choice and the optimal gear G_{TARGET} is the same as the current gear G_{CURR}.

In other words, the calculation block 22 takes into account that changing gears excessively close over time is not convenient, both to avoid a negative impact on travelling comfort and to prevent excessive mechanical wear of the transmission 6 (in particular of clutch 7 and gearbox 8). Furthermore, the calculation block 22 takes into account that in all cases a gear change implies a certain waste of energy (e.g. for activating the servo-assisted actuators of clutch 7 and gearbox 8) and therefore changing gears to obtain a very modest increase of efficiency of engine 4 is not convenient. Finally, the calculation block 22 takes into account that there are driving situations in which changing gear is not advisable, in order to avoid a negative impact on travelling safety of vehicle 1.

The calculation block 22 calculates the reference torque T_{REF} by means of a simple division between the reference driving power P_{REF} and the current rotation speed ω_{CUPP}. Furthermore, by using the efficiency map stored in memory 21, the calculation block 22 determines the corresponding efficiency E_{CURR} of the engine 4 according to the current rotation speed ω_{CUPP} and to the reference torque T_{REF}, for the current gear G_{CURR}. When determining the efficiency E_{CURR} of engine 4, the reference torque T_{REF} and not the current torque T_{CURR} is used so as to obtain a uniform comparison, i.e. with the same surrounding conditions, with the expected efficiency E_{A} of the gear G_{BEST} with the maximum efficiency which was determined by assuming to transmit the reference driving power P_{REF} and not the current driving power P_{CURR}. Alternatively, according to a different embodiment, a current torque T_{CURR} is used instead of the reference torque T_{REF} for determining the efficiency E_{CURR} of the engine 4.

The calculation block 22 determines an efficiency differential ΔE between the efficiency E_{CURR} of the current gear G_{CURR} and the expected efficiency E_{A} of the gear G_{BEST} with the maximum efficiency, and thus identifies the optimal gear G_{TARGET} by choosing between the gear G_{BEST} with the maximum efficiency and the current gear G_{CURR} according to the efficiency differential ΔE. According to a preferred embodiment, the calculation block 22 identifies the gear G_{BEST} with the maximum efficiency as the optimal gear G_{TARGET} only if the efficiency differential ΔE is higher than a threshold value V1; moreover, the calculation block 22 determines a time interval ΔT elapsed from the last gear change during which the current gear G_{CURR} was engaged and varies the threshold value V1 according to the width of the time interval ΔT, so that the threshold value decreases as the width of the time interval ΔT increases. In other words, the threshold value V1 is not constant but varies according to the width of the time interval ΔT, being decreasing as the width of the time interval ΔT increases.

By using the comparison of the efficiency differential ΔE with the threshold value V1, changing a gear may be avoided when the increase of efficiency of engine 4 is not very significant, and a gear change is also allowed at a short time distance from the previous gear change, when the current gear G_{CURR} was engaged, only if the efficiency increase (i.e. the efficiency differential ΔE) is high.

Alternatively or in combination with the above-described use of the comparison of the efficiency differential ΔE with the threshold value V1, the calculation block 22 may use a comparison of the time interval ΔT elapsed since the last gear change when the current gear G_{CURR} was engaged, with a threshold value V2. In particular, the current gear G_{CURR} is always identified as the optimal gear G_{TARGET}, if the width of the time interval ΔT is smaller than the threshold value V2. The threshold value V2 may be varied according to the efficiency differential ΔE between the efficiency E_{CURR} of the current gear G_{CURR} and the expected efficiency E_{A} of the gear G_{BEST} with maximum efficiency, so that the threshold value V2 decreases as the efficiency differential ΔE increases. By using the comparison of the time interval ΔT with the threshold value V2, changing gears excessively close over time with respect to the last gear change may be avoided.

According to a possible embodiment, the calculation block 22 also receives at the input a safety signal S which indicates when vehicle 1 is in safe conditions for changing gear and thus enables a possible gear change. The calculation block 22 identifies an optimal gear G_{TARGET} different from the current gear G_{CURR} only if vehicle 1 is in safe conditions for a gear change; otherwise, if vehicle 1 is not in safe conditions for a gear change, then the calculation block 22 always identifies the current gear G_{CURR} as the optimal gear G_{TARGET}. The safety signal S is typically supplied by a vehicle stability controller 1 and/or by a satellite navigator which determines the current position of vehicle 1 and thus identifies when the vehicle 1 is approaching curves, upslopes, downslopes, etc. According to a further embodiment, with preventive information about the presence of upslopes, downslopes, curves, their entity and their distance with respect to the moving vehicle 1, the optimal gear G_{TARGET} may be chosen from the point of view of safety in addition to the point of view of maximizing the efficiency, e.g. by mapping the travel gear according to the gradient and to the proceeding speed V of vehicle 1, or according to the curvature radius and to the proceeding speed V of vehicle 1. Alternatively, again according to the gradient of the street and to the proceeding speed V of vehicle 1, or according to the curvature radius and to the proceeding speed V of vehicle 1, the maximum and minimum gears may be mapped instead of the target gear, so as to restrict the range of available gears G_{AVA}.

When the accelerator pedal 15 is released, the engine 4 is under cut-off conditions (i.e. under zero fuel consumption conditions) and therefore there is no need to further optimize fuel consumption. When the accelerator pedal 15 is released there is no need to select gears to optimize fuel consumption, which is already zero, therefore when the accelerator pedal 15 is released, the gears are selected to comply with the driver's wishes and to optimize the use of kinetic energy of vehicle 1. The position of the brake pedal 16 is useful to discriminate the behavior when releasing: if the accelerator pedal 15 is released, the driver requires negative torque from the engine 4, and even if the brake pedal 16 is pressed, low gears will be preferred in order to have better braking torque on the drive wheels 3, otherwise if the brake pedal 16 is not pressed, high gears will be preferred in order to prevent an excessive dissipation of kinetic energy of vehicle 1 in internal friction and pumping losses.

According to a preferred embodiment, the optimal gear G_{TARGET} is automatically engaged, obviously only if it is different from the current gear G_{CURR}, by the control unit 13 of transmission 6 without needing any type of intervention by the driver. According to an alternative embodiment, the optimal gear G_{TARGET} is not automatically engaged by the control unit 13 of transmission 6, but is only suggested to the driver by means of an appropriate visual and/or acoustic signal; in this case, an estimate of the fuel consumption reduction which could be obtained by engaging the optimal gear G_{TARGET} instead of the current gear G_{CURR} may also be communicated. The mode which provides for the optimal gear G_{TARGET} being only suggested to the driver is also applicable to a traditional transmission 6 free from servo-assistance (i.e. having the clutch 7 and a manually controlled gearbox 8).

It is worth noting that the above-described identification method of the gear has the sole objective of achieving the maximum possible energy efficiency compatibly with the physical limits of the engine 4 and with the drivability needs; therefore, the above-described identification method of the gear is only used when there is the need/possibility of optimizing consumption (e.g. it is not used when the driver selects a sporty driving style). Furthermore, the normal control logics of transmission 6 are always present in parallel to the above-described identification method of the gear, which normal control logics may impose a gear change regardless of the indications supplied by the above-described identification method of the gear according to safety needs (e.g. to avoid a runaway speed rate of the engine 4 or to increase stability or traction control).

The above-described identification method of the gear has many advantages. In particular, the above-described identification method of the gear allows to decrease (minimize) fuel consumption and production of pollutants without simultaneously penalizing the dynamics of vehicle 1. Moreover, the above-described identification method of the gear is simple and cost-effective to be implemented even in an existing vehicle of modern concept, because it does not require the installation of additional physical components with respect to those normally present, and requires a modest calculation power which does not result in enhancing the calculation abilities of the control unit of the existing transmission. Finally, the ease of calibration of the above-described identification method of the gear is emphasized, as the main calibration part which includes determining the efficiency map of the engine 4 mainly derives from off-vehicle tests, which are however needed for characterizing the engine 4 in order to allow a suitable control of the engine 4 by the control unit 12.

## Claims

1. Identification method of the optimal gear (G_{TARGET}) for a transmission (6) of a vehicle (1) provided with an engine (4); the identification method comprises the steps of:
measuring a proceeding speed (V) of the vehicle (1) ;
measuring a current rotation speed (ω_{CURR}) of the engine (4);
determining a reference driving power (P_{REF});
identifying the available gears (G_{AVA}) which are able to make the engine (4) provide the reference driving power (P_{REF}) at the proceeding speed (V) of the vehicle (1);
calculating for each available gear (G_{AVA}) the corresponding expected rotation speed (ω_{A}), which would be imposed on the engine (4) according to the proceeding speed (V) of the vehicle (1) and to a transmission ratio of the gear;
calculating for each available gear (G_{AVA}) the corresponding expected torque (T_{A}), which would be required to the engine (4) according to the reference driving power (P_{REF}) and to the expected rotation speed (ω_{A}) ;
determining for each available gear (G_{AVA}) the corresponding expected efficiency (E_{A}) from the engine (4) according to the expected rotation speed (ω_{A}) and to the expected torque (T_{A}) ;
identifying a gear (G_{BEST}) with the maximum efficiency among the available gears (G_{AVA}) by identifying the gear presenting the highest expected efficiency (E_{A});
identifying a current gear (G_{CURR}) currently engaged;
determining for the current gear (G_{CURR}) the corresponding efficiency (E_{CURR}) of the engine (4) according to the current rotation speed (ω_{CURR}) and to a current torque (T_{CURR}) or a reference torque (T_{REF});
determining an efficiency differential (ΔE) between the efficiency (E_{CURR}) of the current gear (G_{CURR}) and the expected efficiency (E_{A}) of the gear (G_{BEST}) with the maximum efficiency; and
identifying the optimal gear (G_{TARGET}) by choosing between the gear (G_{BEST}) with the maximum efficiency and the current gear (G_{CURR}) according to the efficiency differential (ΔE);
the identification method is **characterized in that** it comprises the further steps of identifying the gear (G_{BEST}) with the maximum efficiency as the optimal gear (G_{TARGET}), only if the efficiency differential (ΔE) is higher than the first threshold value (V1).

2. Identification method according to claim 1, wherein the step of identifying the available gears (G_{AVA}) comprises the further steps of:
determining, during the design phase, an acceptability interval of the rotation speed of the engine (4) comprising a minimum rotation speed and a maximum rotation speed;
determining, during the design phase, an acceptability interval of the torque of the engine (4) comprising a minimum torque and a maximum torque;
calculating for each gear of the transmission (6) the corresponding expected rotation speed (ω_{A}), which would be imposed on the engine (4) according to the proceeding speed (V) of the vehicle (1) and to a transmission ratio of the gear;
calculating for each gear of the transmission (6) the corresponding expected torque (T_{A}), which would be required to the engine (4) according to the reference driving power (P_{REF}) and to the expected rotation speed (ω_{A}) ;
identifying the available gears (G_{AVA}) by eliminating from all the gears of the transmission (6) those gears which have the expected rotation speed (ω_{A}) and/or the expected torque (T_{A}) going beyond the corresponding acceptability intervals of the engine (4).

3. Identification method according to claim 2, wherein the acceptability interval of the rotation speed and/or the acceptability interval of the torque are narrower than the actual physical limits of the engine (4), in order to ensure a certain change margin.

4. Identification method according to claim 2 or 3 and comprising the further step of differentiating the acceptability interval of the rotation speed and/or the acceptability interval of the torque for the several gears.

5. Identification method according to claim 2, 3 or 4 and comprising the further steps of:
increasing a differential between the maximum torque of the acceptability interval of the torque and a maximum torque, which can be physically delivered by the engine (4), when the reference torque (T_{REF}) grows in time; and
decreasing the differential between the maximum torque of the acceptability interval of the torque and a maximum torque, which cab be physically delivered by the engine (4), when the reference torque (T_{REF}) diminishes in time.

6. Identification method according to one of the claims from 1 to 5 comprising the further steps of:
determining a time interval (AT) elapsed since the last gear change, in which the current gear (G_{CURR}) was engaged; and
varying the first threshold value (V1) according to the width of the time interval (ΔT), so that the first threshold value (V1) decreases when the width of the time interval (AT) grows.

7. Identification method according to one of the claims from 1 to 6 and comprising the further steps of:
determining a time interval (ΔT) elapsed since the last gear change, in which the current gear (G_{CURR}) was engaged; and
identifying always the current gear (G_{CURR}) as the optimal gear (G_{TARGET}), if the width of the time interval (AT) is lower than a second threshold value (V2).

8. Identification method according to claim 7 and comprising the further steps of:
determining for the current gear (G_{CURR}) the corresponding efficiency (E_{CURR}) of the engine (4) according to the current rotation speed (ω_{CURR}) and to a current torque (T_{CURR}) or a reference torque (T_{REF});
determining an efficiency differential (ΔE) between the efficiency (E_{CURR}) of the current gear (G_{CURR}) and the efficiency (E_{A}) expected of the gear (G_{BEST}) with the maximum efficiency; and
varying the second threshold value (V2) according to the efficiency differential (ΔE), so that the second threshold value (V2) decreases when the efficiency differential (ΔE) grows.

9. Identification method according to one of the claims from 1 to 8 and comprising the further step of determining, during the design phase, a three-dimensional efficiency map, which provides the efficiency of the engine (4) according to the rotation speed of the engine (4) and to the torque delivered by the engine (4)

10. Identification method according to one of the claims from 1 to 9 and comprising the further step of:
determining if the vehicle (1) is in safe conditions for a gear change; and
identifying the optimal gear (G_{TARGET}) different from the current gear (G_{CURR}) only if the vehicle (1) is in safe conditions for a gear change.

11. Identification method according to one of the claims from 1 to 10 and comprising the further step of:
determining the presence along the path of the vehicle (1) of curves, upslopes, downslopes or other critical conditions which need to be faced even considering safety, and their distance from the vehicle (1) ;
identifying according to the gradient of the street, to the distance from a critical condition and to the proceeding speed (V) of the vehicle (1), or according to the radius of curvature, the distance from the curve and the proceeding speed (V) of the vehicle (1), a limited number of gears which have to be considered for safety reasons and among which one has to search for the available gears (G_{AVA}).

12. Identification method according to one of the claims from 1 to 11, wherein the step of determining the reference driving power (P_{REF}) includes:
determining a current driving power (P_{CURR}) of the engine (4); and
determining the reference driving power (P_{REF}) according to the current driving power (P_{CURR}).

13. Identification method according to one of the claims from 1 to 12, wherein the step of determining the reference driving power (P_{REF}) includes:
determining a current driving power (P_{CUPR});
determining a proceeding speed (V) of the vehicle (1) ;
determining a position of an accelerator pedal (15); and
determining the reference driving power (P_{REF}) according to the current driving power (P_{CURR}), according to the proceeding speed (V) of the vehicle (1), and according to the position of an accelerator pedal (15).

14. Identification method of the optimal gear (G_{TARGET}) for a transmission (6) of a vehicle (1) provided with an engine (4); the identification method comprises the steps of:
measuring a proceeding speed (V) of the vehicle (1) ;
measuring a current rotation speed (ω_{CURR}) of the engine (4);
determining a reference driving power (P_{REF});
identifying the available gears (G_{AVA}) which are able to make the engine (4) provide the reference driving power (P_{REF}) at the proceeding speed (V) of the vehicle (1);
calculating for each available gear (G_{AVA}) the corresponding expected rotation speed (ω_{A}), which would be imposed on the engine (4) according to the proceeding speed (V) of the vehicle (1) and to a transmission ratio of the gear;
calculating for each available gear (G_{AVA}) the corresponding expected torque (T_{A}), which would be required to the engine (4) according to the reference driving power (P_{REF}) and to the expected rotation speed (ω_{A});
determining for each available gear (G_{AVA}) the corresponding expected efficiency (E_{A}) from the engine (4) according to the expected rotation speed (ω_{A}) and to the expected torque (T_{A});
identifying a gear (G_{BEST}) with the maximum efficiency among the available gears (G_{AVA}) by identifying the gear presenting the highest expected efficiency (E_{A});
identifying a current gear (G_{CURR}) currently engaged; and
identifying the optimal gear (G_{TARGET}) by choosing between the gear (G_{BEST}) with the maximum efficiency and the current gear (G_{CURR}) according to the corresponding expected efficiencies (E_{A});
the identification method is **characterized in that** it comprises the further steps of:
determining a time interval (AT) elapsed since the last gear change, in which the current gear (G_{CURR}) was engaged; and
identifying always the current gear (G_{CURR}) as the optimal gear (G_{TAAGET}), if the width of the time interval (ΔT) is lower than a second threshold value (V2).

## Patentansprüche

1. Ermittlungsverfahren des optimalen Gangs (G_{TARGET}) für ein Getriebe (6) eines Fahrzeugs (1), das mit einem Motor (4) versehen ist, welches Ermittlungsverfahren die Schritte enthält:
Messen einer Fahrgeschwindigkeit (V) des Fahrzeugs (1);
Messen einer gegenwärtigen Drehzahl (ω_{CURR}) des Motors (4);
Bestimmen einer Bezugsantriebsleistung (P_{REF});
Ermitteln der verfügbaren Gänge (G_{AVA}), welche in der Lage sind, den Motor (4) die Bezugsantriebsleistung (P_{REF}) bei der Fahrgeschwindigkeit (V) des Fahrzeugs (1) bereitstellen zu lassen;
Berechnen der entsprechenden erwarteten Drehzahl (ω_{A}), die dem Motor (4) gemäß der Fahrgeschwindigkeit (V) des Fahrzeugs (1) und gemäß einem Übersetzungsverhältnis des Gangs aufgegeben würde, für jeden verfügbaren Gang (G_{AVA});
Berechnen des entsprechenden erwarteten Drehmoments (T_{A}),
welches von dem Motor (4) gemäß der
Bezugsantriebsleistung (P_{REF}) und der erwarteten Drehzahl (ω_{A}) erforderlich wäre, für jeden verfügbaren Gang (G_{AVA}) ;
Bestimmen des entsprechenden erwarteten Wirkungsgrads (E_{A}) von dem Motor (4) gemäß der erwarteten Drehzahl (ω_{A}) und
dem erwarteten Drehmoment (T_{A}) für jeden verfügbaren Gang (G_{AVA});
Ermitteln eines Gangs (G_{BEST}) mit dem maximalen Wirkungsgrad unter den verfügbaren Gängen (G_{AVA}) durch Ermitteln des Gangs, der den höchsten erwarteten Wirkungsgrads (E_{A}) darstellt;
Ermitteln eines gegenwärtigen Gangs (G_{CURR}), der gegenwärtig in Eingriff ist;
Bestimmen des entsprechenden Wirkungsgrads (E_{CURR}) des Motors (4) gemäß der gegenwärtigen Drehzahl (ω_{CURR}) und gemäss einem gegenwärtigen Drehmoment (T_{CURR}) oder einem Bezugsdrehmoment (T_{REF}) für den gegenwärtigen Gang (G_{CURR});
Bestimmen einer Wirkungsgraddifferenz (ΔE) zwischen dem Wirkungsgrad (E_{CURR}) des gegenwärtigen Gangs (G_{CURR}) und dem erwarteten Wirkungsgrad (E_{A}) des Gangs (G_{BEST}) mit dem maximalen Wirkungsgrad; und
Ermitteln des optimalen Gangs (G_{TARGET}) durch Auswählen zwischen dem Gang (G_{BEST}) mit dem maximalen Wirkungsgrad und dem gegenwärtigen Gang (G_{CURR}) gemäß der Wirkungsgraddifferenz (ΔE);
welches Ermittlungsverfahren **dadurch gekennzeichnet ist, dass** es die weiteren Schritte des Ermittelns des Gangs (G_{BEST}) mit dem maximalen Wirkungsgrad als den optimalen Gang (G_{TAFGET}) nur dann, wenn die Wirkungsgraddifferenz (ΔE) höher als ein erster Schwellenwert (V1) ist, enthält.

2. Ermittlungsverfahren nach Anspruch 1, wobei der Schritt des Ermittelns der verfügbaren Gänge (G_{AVA}) die weiteren Schritte enthält:
Bestimmen eines Akzeptanzintervalls der Drehzahl des Motors (4), der eine kleinste Drehzahl und eine größte Drehzahl umfasst, während der Konstruktionsphase;
Bestimmen eines Akzeptanzintervalls des Drehmoments des Motors (4), der ein kleinstes Drehmoment und ein größtes Drehmoment umfasst, während der Konstruktionsphase;
Berechnen der entsprechenden erwarteten Drehzahl (ω_{A}), welche dem Motor (4) gemäß der Fahrgeschwindigkeit (V) des Fahrzeugs (1) und einem Übersetzungsverhältnis des Gangs aufgegeben würde, für jeden Gang des Getriebes (6);
Berechnen des entsprechenden erwarteten Drehmoments (T_{A}), welches von dem Motor (4) gemäß der Bezugsantriebsleistung (P_{REF}) und der erwarteten Drehzahl (ω_{A}) benötigt würde, für jeden Gang des Getriebes (6);
Ermitteln der verfügbaren Gänge (G_{AVA}), indem aus allen Gängen des Getriebes (6) diejenigen Gänge eliminiert werden, bei welchen die erwartete Drehzahl (ω_{A}) und/oder das erwartete Drehmoment (T_{A}) die entsprechenden Akzeptanzintervalle des Motors (4) überschreiten.

3. Ermittlungsverfahren nach Anspruch 2, wobei der Akzeptanzintervall der Drehzahl und/oder der Akzeptanzintervall des Drehmoments schmaler als die tatsächlichen physischen Grenzen des Motors (4) sind, um einen gewissen Wechselspielraum sicherzustellen.

4. Ermittlungsverfahren nach Anspruch 2 oder 3 und enthaltend den weiteren Schritt des Differenzierens des Akzeptanzintervalls der Drehzahl und/oder des Akzeptanzintervalls des Drehmoments für die verschiedenen Gänge.

5. Ermittlungsverfahren nach Anspruch 2, 3 oder 4 und enthaltend die weiteren Schritte:
Erhöhen einer Differenz zwischen dem größten Drehmoment des Akzeptanzintervalls des Drehmoments und einem größten Drehmoment, welches von dem Motor (4) physisch abgegeben werden kann, wenn das Bezugsdrehmoment (T_{REF}) über die Zeit zunimmt; und
Vermindern der Differenz zwischen dem größten Drehmoment des Akzeptanzintervalls des Drehmoments und einem größten Drehmoment, welches von dem Motor (4) physisch abgegeben werden kann, wenn das Bezugsdrehmoment (T_{REF}) über die Zeit abnimmt.

6. Ermittlungsverfahren einem der Ansprüche von 1 bis 5, enthaltend die weiteren Schritte:
Bestimmen eines Zeitintervalls (ΔT), der seit dem letzten Gangwechsel verstrichen ist, bei welchem der gegenwärtige Gang (G_{CURR}) eingelegt wurde; und
Variieren des ersten Schwellenwerts (V1) gemäß der Breite des Zeitintervalls (ΔT), so dass der erste Schwellenwert (V1) abnimmt, wenn die Breite des Zeitintervalls (ΔT) zunimmt.

7. Ermittlungsverfahren nach einem der Ansprüche von 1 bis 6 und enthaltend die weiteren Schritte:
Bestimmen eines Zeitintervalls (ΔT), der seit dem letzten Gangwechsel verstrichen ist, bei welchem der gegenwärtige Gang (G_{CURR}) eingelegt wurde; und
Ermitteln stets des gegenwärtigen Gangs (G_{CURR}) als den optimalen Gang (G_{TAFGET}), wenn die Breite des Zeitintervalls (ΔT) geringer ist als ein zweiter Schwellenwert (V2).

8. Ermittlungsverfahren nach Anspruch 7 und enthaltend die weiteren Schritte:
Bestimmen des entsprechenden Wirkungsgrads (E_{CURR}) des Motors (4) für den gegenwärtigen Gang (G_{CURR}) gemäß der gegenwärtigen Drehzahl (ω_{CURR}) und einem gegenwärtigen Drehmoment (T_{CURR}) oder einem Bezugsdrehmoment (T_{REF});
Bestimmen einer Wirkungsgraddifferenz (ΔE) zwischen dem Wirkungsgrad (E_{CURR}) des gegenwärtigen Gangs (G_{CURR}) und dem von dem Gang (G_{BEST}) mit dem größten Wirkungsgrad erwarteten Wirkungsgrad (E_{A}); und
Variieren des zweiten Schwellenwerts (V2) gemäß der Wirkungsgraddifferenz (ΔE), so dass der zweite Schwellenwert (V2) abnimmt, wenn die Wirkungsgraddifferenz (ΔE) zunimmt.

9. Ermittlungsverfahren nach einem der Ansprüche von 1 bis 8 und enthaltend den weiteren Schritt des Bestimmens einer dreidimensionalen Wirkungsgradskarte während der Konstruktionsphase, welche den Wirkungsgrad des Motors (4) gemäß der Drehzahl des Motors (4) und dem von dem Motor (4) abgegebenen Drehmoment angibt.

10. Ermittlungsverfahren nach einem der Ansprüche von 1 bis 9 und enthaltend den weiteren Schritt:
Bestimmen, ob das Fahrzeug (1) unter sicheren Bedingungen für einen Gangwechsel ist; und
Ermitteln des von dem gegenwärtigen Gang (G_{CURR}) verschiedenen optimalen Gangs (G_{TAFGET}) nur dann, wenn das Fahrzeug (1) unter sicheren Bedingungen für einen Gangwechsel ist.

11. Ermittlungsverfahren nach einem der Ansprüche von 1 bis 10 und enthaltend den weiteren Schritt:
Bestimmen des Vorhandenseins von Kurven, Steigungen, Gefällen oder anderen kritischen Bedingungen entlang dem Weg des Fahrzeugs (1), welche auch unter Berücksichtigung der Sicherheit wahrgenommen werden müssen, sowie ihres Abstands von dem Fahrzeug (1);
Ermitteln gemäß der Neigung der Straße, gemäß dem Abstand von einer kritischen Bedingung und gemäß der Fahrgeschwindigkeit (V) des Fahrzeugs (1) oder gemäß dem Krümmungsradius, dem Abstand von der Kurve und der Fahrgeschwindigkeit (V) des Fahrzeugs (1) einer begrenzten Anzahl von Gängen, welche aus Sicherheitsgründen berücksichtigt werden müssen und unter welchen nach verfügbaren Gängen (G_{AVA}) gesucht werden muss.

12. Ermittlungsverfahren nach einem der Ansprüche von 1 bis 11, wobei der Schritt des Bestimmens der Bezugsantriebsleistung (P_{REF}) enthält:
Bestimmen einer gegenwärtigen Antriebsleistung (P_{CURR}) des Motors (4); und
Bestimmen der Bezugsantriebsleistung (P_{REF}) gemäß der gegenwärtigen Antriebsleistung (P_{CURR}).

13. Ermittlungsverfahren nach einem der Ansprüche von 1 bis 12, wobei der Schritt des Bestimmens der Bezugsantriebsleistung (P_{REF}) enthält:
Bestimmen einer gegenwärtigen Antriebsleistung (P_{CURR});
Bestimmen einer Fahrgeschwindigkeit (V) des Fahrzeugs (1) ;
Bestimmen einer Stellung des Gaspedals (15); und
Bestimmen der Bezugsantriebsleistung (P_{REF}) gemäß der gegenwärtigen Antriebsleistung (P_{CURR}), gemäß der Fahrgeschwindigkeit (V) des Fahrzeugs (1) und gemäß der Position eines Gaspedals (15).

14. Ermittlungsverfahren des optimalen Gangs (G_{TAFGET}) für ein Getriebe (6) eines Fahrzeugs (1), das mit einem Motor (4) versehen ist, welches Ermittlungsverfahren die Schritte enthält:
Messen einer Fahrgeschwindigkeit (V) des Fahrzeugs (1);
Messen einer gegenwärtigen Drehzahl (ω_{CURR}) des Motors (4);
Bestimmen einer Bezugsantriebsleistung (P_{REF});
Ermitteln der verfügbaren Gänge (G_{AVA}), welche in der Lage sind, den Motor (4) die Bezugsantriebsleistung (P_{REF}) bei der Fahrgeschwindigkeit (V) des Fahrzeugs (1) bereitstellen zu lassen;
Berechnen der entsprechenden erwarteten Drehzahl (ω_{A}), die dem Motor (4) gemäß der Fahrgeschwindigkeit (V) des Fahrzeugs (1) und gemäß einem Übersetzungsverhältnis des Gangs aufgegeben würde, für jeden verfügbaren Gang (G_{AVA});
Berechnen des entsprechenden erwarteten Drehmoments (T_{A}), welches von dem Motor (4) gemäß der Bezugsantriebsleistung (P_{REF}) und der erwarteten Drehzahl (ω_{A}) erforderlich wäre, für jeden verfügbaren Gang (G_{AVA});
Bestimmen des entsprechenden erwarteten Wirkungsgrads (E_{A}) von dem Motor (4) gemäß der erwarteten Drehzahl (ω_{A}) und dem erwarteten Drehmoment (T_{A}) für jeden verfügbaren Gang (G_{AVA});
Ermitteln eines Gangs (G_{BEST}) mit dem größten Wirkungsgrad unter den verfügbaren Gängen (G_{AVA}) durch Ermitteln des Gangs, der den höchsten erwarteten Wirkungsgrad (E_{A}) darstellt;
Ermitteln eines gegenwärtigen Gangs (G_{CURR}), der gegenwärtig in Eingriff ist; und
Ermitteln des optimalen Gangs (G_{TARGET}) durch Auswählen zwischen dem Gang (G_{BEST}) mit dem maximalen Wirkungsgrad und dem gegenwärtigen Gang (G_{CURR}) gemäß den entsprechenden erwarteten Wirkungsgraden (E_{A});
welches Ermittlungsverfahren **dadurch gekennzeichnet ist, dass** es die weiteren Schritte enthält:
Bestimmen eines Zeitintervalls (ΔT), der seit dem letzten Gangwechsel verstrichen ist, bei welchem der gegenwärtige Gang (G_{CURR}) eingelegt wurde; und
Ermitteln des gegenwärtigen Gangs (G_{CURR}) als den optimalen Gang (G_{TARGET}) stets dann, wenn die Breite des Zeitintervalls (ΔT) niedriger ist als ein zweiter Schwellenwert (V2).

## Revendications

1. Procédé d'identification du rapport d'engrenages optimal (G_{TARGET}) pour une transmission (6) d'un véhicule (1) muni d'un moteur (4) ; le procédé d'identification comprenant les étapes consistant à :
mesurer une vitesse d'avancement (V) du véhicule (1) ;
mesurer une vitesse de rotation actuelle (ω_{CURR}) du moteur (4) ;
déterminer une puissance d'entraînement de référence (P_{REF});
identifier les rapports d'engrenages disponibles (G_{AVA}) qui sont susceptibles de faire délivrer par le moteur (4) la puissance d'entraînement de référence (P_{REF}) à la vitesse d'avancement (V) du véhicule (1) ;
calculer, pour chaque rapport d'engrenages disponible (G_{AVA}), la vitesse de rotation prévue correspondante (ω_{A}), qui serait appliquée au moteur (4) en fonction de la vitesse d'avancement (V) du véhicule (1) et d'un rapport de transmission du rapport d'engrenages ;
calculer, pour chaque rapport d'engrenages disponible (G_{AVA}), le couple prévu correspondant (T_{A}), qui serait demandé au moteur (4) en fonction de la puissance d'entraînement de référence (P_{REF}) et de la vitesse de rotation prévue (ω_{A}) ;
déterminer, pour chaque rapport d'engrenages disponible (G_{AVA}), le rendement prévu correspondant (E_{A}) à partir du moteur (4) en fonction de la vitesse de rotation prévue (ω_{A}) et du couple prévu (T_{A}) ;
identifier un rapport d'engrenages (G_{BEST}) avec le rendement maximal parmi les rapports d'engrenages disponibles (G_{AVA}) par l'identification du rapport d'engrenages présentant le rendement prévu le plus élevé (E_{A}) ;
identifier un rapport d'engrenages actuel (G_{CURR}) actuellement en prise ;
déterminer, pour le rapport d'engrenages actuel (G_{CURR}), le rendement correspondant (E_{CURR}) du moteur (4) en fonction de la vitesse de rotation actuelle (ω_{CURR}) et d'un couple actuel (T_{CURR}) ou d'un couple de référence (T_{REF}) ;
déterminer un différentiel de rendement (ΔE) entre le rendement (E_{CURR}) du rapport d'engrenages actuel (G_{CURR}) et le rendement prévu (E_{A}) du rapport d'engrenages (G_{BEST}) avec le rendement maximal ; et
identifier le rapport d'engrenages optimal (G_{TARGET}) par un choix entre le rapport d'engrenages (G_{BEST}) avec le rendement maximal et le rapport d'engrenages actuel (G_{CURR}) en fonction du différentiel de rendement (ΔE) ;
le procédé d'identification étant **caractérisé en ce qu'**il comprend les étapes supplémentaires d'identification du rapport d'engrenages (G_{BEST}) avec le rendement maximal comme étant le rapport d'engrenages optimal (G_{TARGET}), uniquement si le différentiel de rendement (ΔE) est supérieur à la première valeur de seuil (V1).

2. Procédé d'identification selon la revendication 1, dans lequel l'étape d'identification des rapports d'engrenages disponibles (G_{AVA}) comprend les étapes supplémentaires consistant à :
déterminer, durant la phase de conception, un intervalle d'acceptabilité de la vitesse de rotation du moteur (4) comprenant une vitesse de rotation minimale et une vitesse de rotation maximale ;
déterminer, durant la phase de conception, un intervalle d'acceptabilité du couple du moteur (4) comprenant un couple minimal et un couple maximal ;
calculer, pour chaque rapport d'engrenages de la transmission (6), la vitesse de rotation prévue correspondante (ω_{A}), qui devrait être appliquée au moteur (4) en fonction de la vitesse d'avancement (V) du véhicule (1) et d'un rapport de transmission du rapport d'engrenages ;
calculer, pour chaque rapport d'engrenages de la transmission (6), le couple prévu correspondant (T_{A}), qui serait demandé au moteur (4) en fonction de la puissance d'entraînement de référence (P_{REF}) et de la vitesse de rotation prévue (ω_{A}) ;
identifier les rapports d'engrenages disponibles (G_{AVA}) par élimination, parmi tous les rapports d'engrenages de la transmission (6), des rapports d'engrenages qui ont la vitesse de rotation prévue (ω_{A}) et/ou le couple prévu (T_{A}) qui va au-delà des intervalles d'acceptabilité correspondants du moteur (4).

3. Procédé d'identification selon la revendication 2, dans lequel l'intervalle d'acceptabilité de la vitesse de rotation et/ou l'intervalle d'acceptabilité du couple sont plus étroits que les limites physiques effectives du moteur (4), de façon à assurer certaine marge de changement.

4. Procédé d'identification selon la revendication 2 ou 3, et comprenant l'étape supplémentaire de différenciation de l'intervalle d'acceptabilité de la vitesse de rotation et/ou de l'intervalle d'acceptabilité du couple pour les différents rapports d'engrenages.

5. Procédé d'identification selon la revendication 2, 3 ou 4, et comprenant les étapes supplémentaires consistant à :
augmenter un différentiel entre le couple maximal de l'intervalle d'acceptabilité du couple et un couple maximal, qui peut être physiquement délivré par le moteur (4), lorsque le couple de référence (T_{REF}) s'accroît dans le temps ; et
diminuer le différentiel entre le couple maximal de l'intervalle d'acceptabilité du couple et un couple maximal, qui peut être physiquement délivré par le moteur (4), lorsque le couple de référence (T_{REF}) diminue dans le temps.

6. Procédé d'identification selon l'une des revendications 1 à 5, comprenant les étapes supplémentaires consistant à :
déterminer un intervalle de temps (ΔT) écoulé depuis le dernier changement de rapport d'engrenages, dans lequel le rapport d'engrenages actuel (G_{CURR}) était en prise ; et
faire varier la première valeur de seuil (V1) en fonction de la largeur de l'intervalle de temps (ΔT), de telle sorte que la première valeur de seuil (V1) diminue lorsque la largeur de l'intervalle de temps (ΔT) s'accroît.

7. Procédé d'identification selon l'une des revendications 1 à 6, comprenant les étapes supplémentaires consistant à :
déterminer un intervalle de temps (ΔT) écoulé depuis le dernier changement de rapport d'engrenages, dans lequel le rapport d'engrenages actuel (G_{CURR}) était en prise ; et
identifier toujours le rapport d'engrenages actuel (G_{CURR}) comme étant le rapport d'engrenages optimal (G_{TARGET}), si la largeur de l'intervalle de temps (ΔT) est inférieure à une deuxième valeur de seuil (V2).

8. Procédé d'identification selon la revendication 7, et comprenant les étapes supplémentaires consistant à :
déterminer, pour le rapport d'engrenages actuel (G_{CURR}), le rendement correspondant (E_{CURR}) du moteur (4) en fonction de la vitesse de rotation actuelle (ω_{CURR}) et d'un couple actuel (T_{CURR}) ou d'un couple de référence (T_{REF});
déterminer un différentiel de rendement (ΔE) entre le rendement (E_{CURR}) du rapport d'engrenages actuel (G_{CURR}) et le rendement (E_{A}) prévu du rapport d'engrenages (G_{BEST}) avec le rendement maximal ; et
faire varier la deuxième valeur de seuil (V2) en fonction du différentiel de rendement (ΔE), de telle sorte que la deuxième valeur de seuil (V2) diminue lorsque le différentiel de rendement (ΔE) s'accroît.

9. Procédé d'identification selon l'une des revendications 1 à 8, et comprenant l'étape supplémentaire de détermination, durant la phase de conception, d'une carte de rendement en trois dimensions, qui fournit le rendement du moteur (4) en fonction de la vitesse de rotation du moteur (4) et du couple délivré par le moteur (4).

10. Procédé d'identification selon l'une des revendications 1 à 9, et comprenant l'étape supplémentaire consistant à :
déterminer si le véhicule (1) est dans des conditions sûres pour un changement de rapport d'engrenages ; et
identifier le rapport d'engrenages optimal (G_{TARGET}) différent du rapport d'engrenages actuel (G_{CURR}) uniquement si le véhicule (1) est dans des conditions sûres pour un changement de rapport d'engrenages.

11. Procédé d'identification selon l'une des revendications 1 à 10, et comprenant l'étape supplémentaire consistant à :
déterminer la présence, le long du trajet du véhicule (1), de courbes, de pentes montantes, de pentes descendantes ou d'autres conditions critiques auxquelles il doit être fait face même en considération de la sécurité, et leur distance par rapport au véhicule (1) ;
identifier, en fonction du gradient de la rue, de la distance d'une condition critique, et de la vitesse d'avancement (V) du véhicule (1), ou en fonction du rayon de courbure, de la distance de la courbe et de la vitesse d'avancement (V) du véhicule (1), un nombre limité de rapports d'engrenages qui doivent être considérés pour des raisons de sécurité et parmi lesquels on doit rechercher les rapports d'engrenages disponibles (G_{AVA}).

12. Procédé d'identification selon l'une des revendications 1 à 11, dans lequel l'étape de détermination de la puissance d'entraînement de référence (P_{REF}) comprend :
la détermination d'une puissance d'entraînement actuelle (P_{CURR}) du moteur (4) ; et
la détermination de la puissance d'entraînement de référence (P_{REF}) en fonction de la puissance d'entraînement actuelle (P_{CURR}).

13. Procédé d'identification selon l'une des revendications 1 à 12, dans lequel l'étape de détermination de la puissance d'entraînement de référence (P_{REF}) comprend :
la détermination d'une puissance d'entraînement actuelle (P_{CURR});
la détermination d'une vitesse d'avancement (V) du véhicule (1) ;
la détermination d'une position d'une pédale d'accélérateur (15) ; et
la détermination de la puissance d'entraînement de référence (P_{REF}) en fonction de la puissance d'entraînement actuelle (P_{CURR}), en fonction de la vitesse d'avancement (V) du véhicule (1), et en fonction de la position d'une pédale d'accélérateur (15).

14. Procédé d'identification du rapport d'engrenages optimal (G_{TARGET}) pour une transmission (6) d'un véhicule (1) muni d'un moteur (4) ; le procédé d'identification comprenant les étapes consistant à :
mesurer une vitesse d'avancement (V) du véhicule (1) ;
mesurer une vitesse de rotation actuelle (ω_{CURR}) du moteur (4) ;
déterminer une puissance d'entraînement de référence (P_{REF});
identifier les rapports d'engrenages disponibles (G_{AVA}) qui sont susceptibles de faire délivrer par le moteur (4) la puissance d'entraînement de référence (P_{REF}) à la vitesse d'avancement (V) du véhicule (1) ;
calculer, pour chaque rapport d'engrenages disponible (G_{AVA}), la vitesse de rotation prévue correspondante (ω_{A}), qui serait appliquée au moteur (4) en fonction de la vitesse d'avancement (V) du véhicule (1) et d'un rapport de transmission du rapport d'engrenages ;
calculer, pour chaque rapport d'engrenages disponible (G_{AVA}), le couple prévu correspondant (T_{A}), qui serait demandé au moteur (4) en fonction de la puissance d'entraînement de référence (P_{REF}) et de la vitesse de rotation prévue (ω_{A}) ;
déterminer, pour chaque rapport d'engrenages disponible (G_{AVA}), le rendement prévu correspondant (E_{A}) à partir du moteur (4) en fonction de la vitesse de rotation prévue (ω_{A}) et du couple prévu (T_{A}) ;
identifier un rapport d'engrenages (G_{BEST}) avec le rendement maximal parmi les rapports d'engrenages disponibles (G_{AVA}) par l'identification du rapport d'engrenages présentant le rendement prévu le plus élevé (E_{A}) ;
identifier un rapport d'engrenages actuel (G_{CURR}) actuellement en prise ; et
identifier le rapport d'engrenages optimal (G_{TARGET}) par un choix entre le rapport d'engrenages (G_{BEST}) avec le rendement maximal et le rapport d'engrenages actuel (G_{CURR}) en fonction des rendements prévus correspondants (E_{A}) ;
le procédé d'identification étant **caractérisé en ce qu'**il comprend les étapes supplémentaires consistant à :
déterminer un intervalle de temps (ΔT) écoulé depuis le dernier changement de rapport d'engrenages, dans lequel le rapport d'engrenages actuel (G_{CURR}) était en prise ; et
identifier toujours le rapport d'engrenages actuel (G_{CURR}) comme étant le rapport d'engrenages optimal (G_{TARGET}), si la largeur de l'intervalle de temps (ΔT) est inférieure à une deuxième valeur de seuil (V2).
